# EUROPEAN PATENT SPECIFICATION

(11) **EP 3 669 640 B1**
(45) Date of publication and mention of the grant of the patent: **11.08.2021**
(21) Application number: 18853262.6
(22) Date of filing: 19.06.2018
(51) Int. Cl.: A01G 3/053

(54) **HEDGE TRIMMER**
HECKENSCHERE
TAILLE-HAIE

(30) Priority: 06.09.2017 CN 201710796220
(43) Date of publication of application: 24.06.2020
(73) Proprietor: Nanjing Chervon Industry Co., Ltd., Nanjing, Jiangsu 211106 (CN)
(72) Inventor: WU, Yang, Nanjing Jiangsu 211106 (CN); LI, Li, Nanjing Jiangsu 211106 (CN); LAMELI, Peter, Nanjing Jiangsu 211106 (CN)
(74) Representative: Sun, Yiming
(86) International application number: PCT/CN2018/091795
(87) International publication number: WO 2019/047586

(56) References cited:
- EP-A1- 2 266 389
- EP-A1- 2 681 987
- CN-A- 102 630 506
- CN-A- 103 891 534
- CN-A- 103 907 484
- CN-A- 105 453 913
- CN-U- 201 976 488
- CN-U- 202 551 748
- US-A- 4 932 126
- US-A- 4 932 126
- US-A1- 2008 066 325
- US-A1- 2012 017 447

## Description

### TECHNICAL FIELD

The present disclosure relates to a garden tool, and particularly, to a hedge trimmer.

### BACKGROUND

A hedge trimmer is a garden tool that can be operated by a user to prune vegetation such as shrubs and hedges. The existing hedge trimmers have limited cutting capabilities and cannot effectively cut some relatively thick branches.

The hedge trimmer usually includes: a housing, a motor, a transmission device, and a blade assembly, where the blade assembly includes a first blade and a second blade capable of moving relatively to achieve a cutting function, see EP 2 266 389 A1, that discloses a hedge trimmer according to the preamble of claim 1.

The shape of the handle of the existing hedge trimmer is irregular, resulting in poor hand feeling to the user and unstable operation. Furthermore, when the user needs to repair the parts inside the hedge trimmer, the amount of disassembly work is large, and the maintenance time is long. In addition, the grease in the transmission device does not allow every part to be effectively lubricated.

### SUMMARY

In order to solve the shortcomings of the existing art, the object of the present invention is to provide a hedge trimmer with a higher cutting ability.

To achieve the object, the present invention adopts the technical solutions described below.

A hedge trimmer includes a blade assembly including a first blade and a second blade that are capable of moving relatively; a motor including a motor shaft capable of rotating about a motor axis; a transmission device configured to transmit motion between the motor and the blade assembly; and a housing formed with a receiving cavity for receiving the motor and the transmission device. The motor drives the first blade and the second blade to move relatively The transmission device includes: a speed reduction assembly including a first gear for introducing motion output from the motor to the transmission device; and an eccentric block assembly including an eccentric block, where the eccentric block includes a first eccentric portion for cooperating with the first blade and a second eccentric portion for cooperating with the second blade.

The first blade includes a first blade edge portion formed with a plurality of first blade edges and a first connecting portion connecting the first blade portion and the transmission device; a second blade includes a second blade edge portion formed with a plurality of second blade edges and a second connecting portion connecting the second blade edge portion and the transmission device; the eccentric block assembly further includes a first bearing including a first inner ring which is in contact with the first eccentric portion and a first outer ring which is in contact with the first connecting portion and a second bearing including a second inner ring which is in contact with the second eccentric portion and a second outer ring which is in contact with the second connecting portion; and the first connecting portion is formed with a first oblong hole, the first bearing is disposed in the first oblong hole, the second connecting portion is formed with a second oblong hole, and the second bearing is disposed in the second oblong hole.

Further, the eccentric block is further formed with an eccentric hole that sequentially penetrates the first eccentric portion and the second eccentric portion; the transmission device includes a driving shaft passing through the eccentric hole.

Further, the driving shaft includes a passing portion that passes through the eccentric hole and is located on a side of the eccentric block facing away from the motor; the hedge trimmer further includes a third bearing sleeved on the passing portion.

Further, the housing further includes a lower cover that is detachable from the housing, and the lower cover closes the receiving cavity on a lower side of the receiving cavity; the third bearing includes a third inner ring that is in clearance fit with the passing portion and a third outer ring that is fixedly connected to the lower cover.

Further, the lower cover is formed with a receiving groove, and the third bearing is disposed in interference fit with the receiving groove.

Further, the hedge trimmer further includes a circuit board for controlling the motor; the housing includes a main body portion formed with a main handle for a user to hold and with a support portion for supporting the circuit board, an upper cover surrounding, with the support portion, and formed with an upper chamber for receiving the motor, and a lower cover surrounding, with the support portion, and formed with a lower chamber for receiving the transmission device; where the circuit board is disposed in the upper chamber.

Further, the eccentric block is further formed with an eccentric hole that sequentially penetrates the first eccentric portion and the second eccentric portion; the transmission device includes a driving shaft, and the driving shaft includes a passing portion passing through the eccentric hole; the hedge trimmer further includes: a third bearing including a third inner ring that is in clearance fit with the passing portion and a third outer ring that is in interference fit with the lower cover.

Further, the first connecting portion and the second connecting portion are made of a first material, and the first blade edge portion and the second blade edge portion are made of a second material different from the first material.

Further, a thickness of the first connecting portion in the direction of the motor axis is greater than a thickness of the first blade edge portion in the axis direction of the motor; a thickness of the second connecting portion in the direction of the motor axis is greater than a thickness of the second blade edge portion in the direction of the motor axis.

Further, the first blade further includes: a first connecting member configured to fixedly connect the first connecting portion and the first blade edge portion as a whole, and a second connecting member configured to fixedly connect the second connecting portion and the second blade edge portion as a whole.

The advantage of the present invention is that: the cutting ability of the hedge trimmer of the present invention is higher.

### BRIEF DESCRIPTION OF DRAWINGS

FIG. 1 is a perspective view of a hedge trimmer according to an embodiment of the present invention;
FIG. 2 is a plan view of the hedge trimmer of FIG. 1;
FIG. 3 is an enlarged view of the hedge trimmer of FIG. 1 after a blade assembly is removed;
FIG. 4 is a top view of the hedge trimmer of FIG. 1;
FIG. 5 is a rear view of the hedge trimmer of FIG. 1;
FIG. 6 is a schematic diagram of the hedge trimmer of FIG. 1 when a flat cutting operation is performed;
FIG. 7 is a schematic diagram of the hedge trimmer of FIG. 1 when a side cutting operation is performed;
FIG. 8 is a plan view of the hedge trimmer of FIG. 1 when a trigger is in a trigger position;
FIG. 9 is a perspective view of the trigger of FIG. 8;
FIG. 10 is a perspective view of the hedge trimmer of FIG. 1 after an upper cover and a lower cover are disassembled;
FIG. 11 is a perspective view of a structure of FIG. 10 from another perspective;
FIG. 12 is a perspective view of the hedge trimmer of FIG. 1 when a first seal member is separated;
FIG. 13 is a perspective view of the hedge trimmer of FIG. 1 when a second seal member is separated;
FIG. 14 is a perspective view of a motor, a transmission device, a blade assembly, and the lower cover of FIG. 10;
FIG. 15 is a sectional view of a structure of FIG. 14 taken along line Z-Z;
FIG. 16 is a perspective view of the motor, transmission device, and blade assembly of FIG. 10;
FIG. 17 is an exploded view of the structure of FIG. 14;
FIG. 18 is an exploded view of a structure of FIG. 16;
FIG. 19 is a perspective view of a tool system according to an embodiment;
FIG. 20 is a perspective view of a tool system according to another embodiment; and
FIG. 21 is a perspective view of a hedge trimmer according to a further embodiment of the present invention.

### DETAILED DESCRIPTION

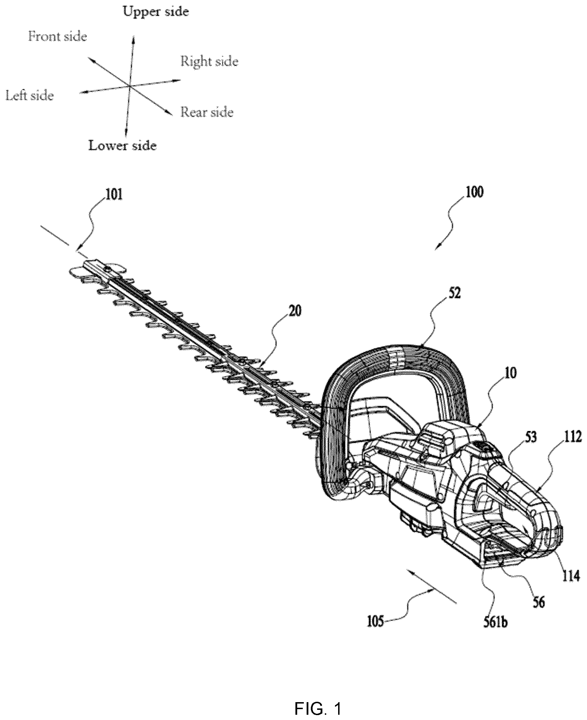

A hedge trimmer 100 of the first embodiment shown in FIG. 1 is used for a user to operate to cut various shrubs, hedges, and other vegetation.

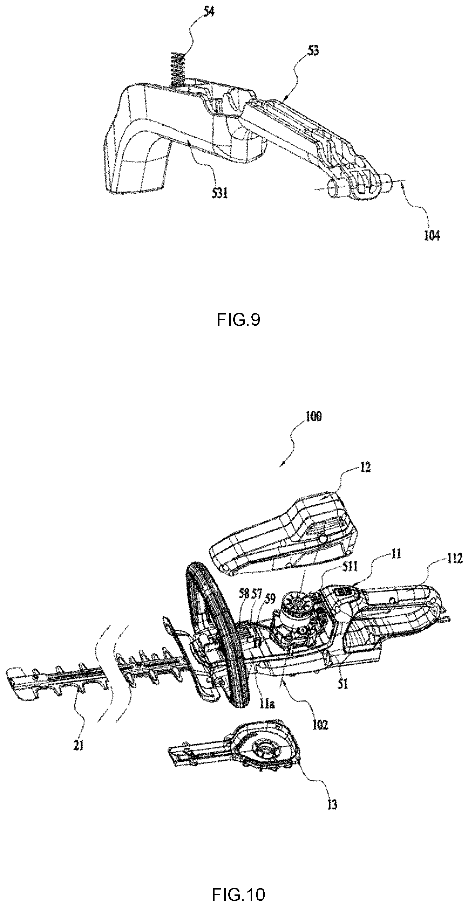

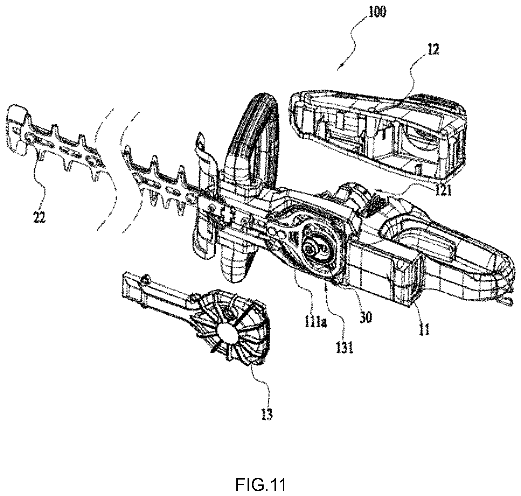

As shown in FIGS. 1 to 5, the hedge trimmer 100 includes a housing 10 and a blade assembly 20 at least partially disposed outside the housing 10. As shown in FIGS. 10 and 11, the hedge trimmer 100 further includes a motor 51 and a transmission device 30. The blade assembly 20 includes a first blade 21 and a second blade 22 that are capable of moving relatively, and the first blade 21 and the second blade 22 both extend along a longitudinal axis 101. The motor 51 is used for driving the first blade 21 and the second blade 22 to move relatively. The motor 51 includes a motor shaft 511 capable of rotating about a motor axis 102. The motor axis 102 is also perpendicular to the longitudinal axis 101 along which the first blade 21 extends. The transmission device 30 is disposed in the housing 10 and is used for transmitting motion between the motor 51 and the blade assembly 20.

To facilitate the description of the technical solution of the present invention, the upper side, the lower side, the front side, the rear side, the left side, and the right side as shown by arrows in FIG. 1 are also defined.

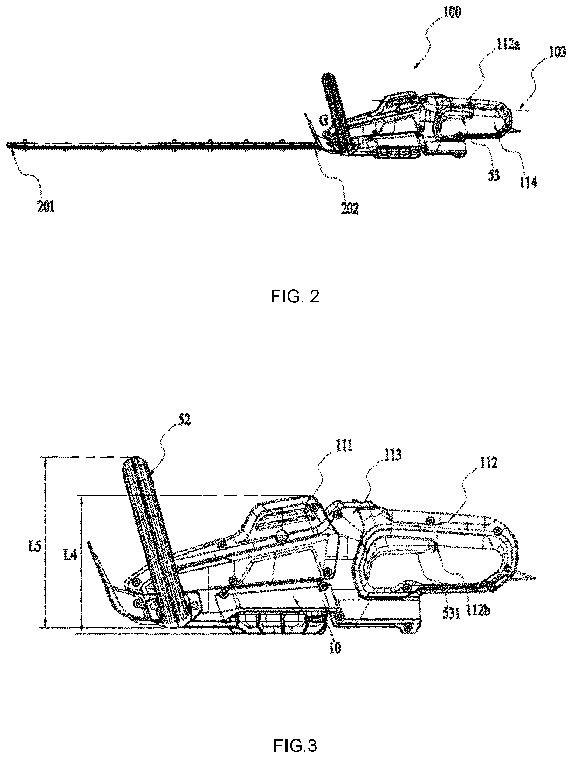

As shown in FIG. 3, in the front and rear direction, the housing 10 includes a receiving portion 111, a main handle 112, and a connecting portion 113 connecting the receiving portion 111 and the main handle 112. In addition, the hedge trimmer 100 further includes an auxiliary handle 52, and the auxiliary handle 52 may be fixedly connected to or detachably connected to or integrally formed with the receiving portion 111.

The receiving portion 111 is used for being formed with a receiving cavity 111a for receiving the motor 51. The main handle 112 is used for the user to hold and includes a holding portion 112a extending substantially along the direction of the first straight line 103. A trigger 53 is further provided on the main handle 112, so that when the user holds the main handle 112, the trigger 53 can be operated at the same time, and thus the motor 51 is started.

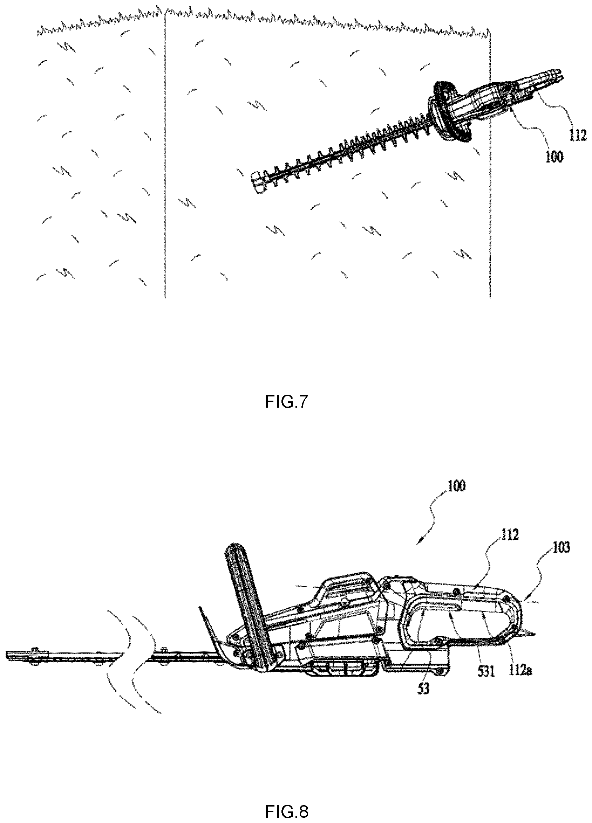

The trigger 53 further includes a contact surface 531 which is in contact with the user's hand when the user holds the main handle 112, and the contact surface 531 exposes the main handle 112. The trigger 53 is slidably or rotatably connected to the main handle 112, and in this embodiment, for example, the trigger 53 is rotatably connected to the main handle 112. When the trigger 53 is moved relative to the main handle 112, the trigger 53 has an initial position in which the trigger is not triggered by the user as shown in FIG. 1, and has a trigger position in which the trigger is triggered by the user to slide over a maximum distance or rotate a maximum angle to start the motor 51 as shown in FIG. 8. When the trigger 53 is in the initial position, the motor 51 is in a shutdown state, and the hedge trimmer 100 does not work; when the trigger 53 is in the trigger position, the motor 51 starts to run, and the hedge trimmer 100 may prune the vegetation.

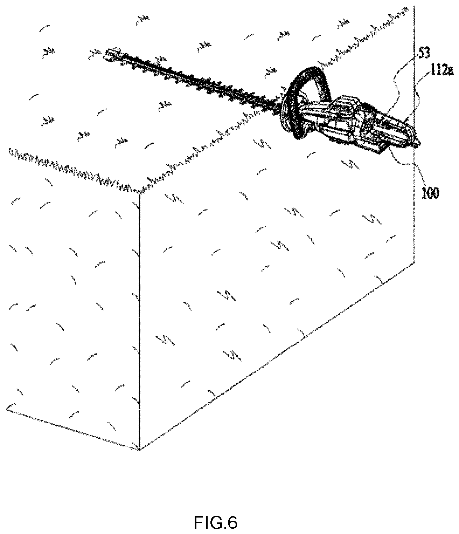

As shown in FIG. 8 and FIG. 9, when the trigger 53 is in the trigger position, the contact surface 531 and an outer surface of the holding portion 112a are butted into a whole with a substantially circular cross section which is in a plane perpendicular to the first straight line 103. Thus, on the one hand, when the user uses the hedge trimmer 100 to perform the flat cutting operation as shown in FIG. 6 or the side cutting operation as shown in FIG. 7, the holding portion 112a and the trigger 53 in the trigger position are substantially columnar, At this time, the hand feeling of the user is relatively good, and the operation is relatively convenient; on the other hand, in the process of pruning vegetation, it is often necessary to switch between the flat cutting operation and the side cutting operation, and in this way, the holding portion 112a and the contact surface 531 of the trigger 53 form a columnar whole so that it is easy to turn 90 degrees for the user's hand without completely disengaging the main handle 112 when the user holds the main handle 112, thereby making the operation smoother. In this way, the user does not need to completely remove the hand holding the main handle 112 and then select a more appropriate position to hold the main handle 112 so as to switch between the flat cutting operation and the side cutting operation.

In this embodiment, as shown in FIG. 1, FIG. 2 and FIG. 9, the trigger 53 is rotatably connected to the main handle 112, and an axis 104 around which the trigger 53 rotates relative to the main handle 112 is further perpendicular to the first straight line 103. A biasing element 54 is further provided between the trigger 53 and the housing 10, and may specifically be a coil spring, where the coil spring is compressed between the housing 10 and the trigger 53, and thus the biasing element 54 can bias the trigger 53 so that the trigger moves toward the initial position, enabling the trigger 53 to be reset to the initial position when the trigger 53 is not operated by the user. The contact surface 531 of the trigger 53 is an arc surface with a straight line parallel to the first straight line 103 as a center line. The holding portion 112a is a cylinder with the first straight line 103 as the center line, a window 112b is provided on the surface of the cylinder, the trigger 53 is disposed at the window 112b, and the contact surface 531 is exposed from the window 112b. When the trigger 53 is in the trigger position, the contact surface 531 roughly closes the window 112b to make the contact surface 531 and an outer surface of the holding portion 112a butt into a complete cylinder. In this embodiment, a ratio of a size of the contact surface 531 in a direction of a circle formed by the contact surface 531 and the holding portion 112a to a circumference of the circle is greater than or equal to 1: 4 and less than or equal to 1: 3, so that the width of the contact surface 531 in the left and right direction is large enough to make the area of the contact surface 531 between the user's hand and the trigger 53 larger, which makes the operation easier and the hand feeling better. In addition, the circumference of the circle formed by the contact surface 531 butting the outer surface of the holding portion 112a is greater than or equal to 90 mm and less than or equal to 120 mm, so that the size of the whole formed by the entire main handle 112 and the trigger 53 is moderate to avoid discomfort for a user to hold due to the fact that the main handle 112 is too thick or too thin.

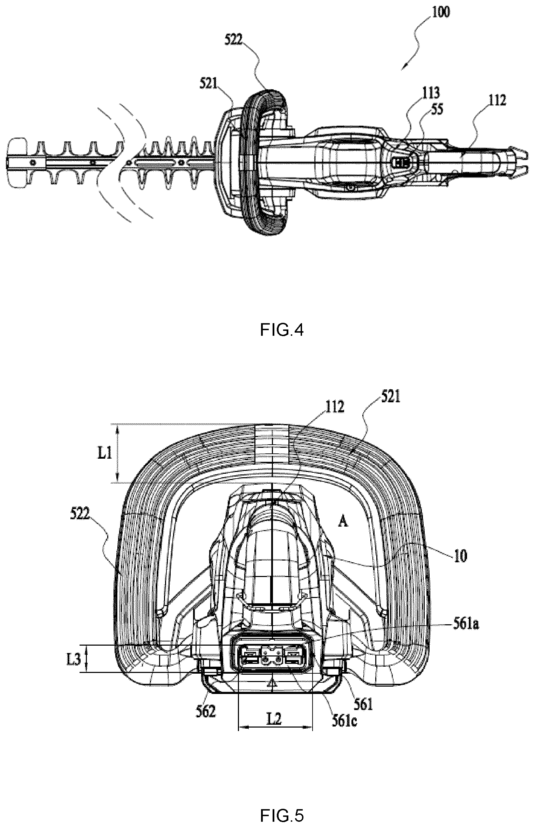

The auxiliary handle 52 is used for the user's other hand to hold and includes a main holding portion 521 and a side holding portion 522. The main holding portion 521 is used for the user's other hand to hold when the flat cutting operation is performed, and the side holding portion 522 is used for the user's other hand to hold when the side cutting operation is performed. As shown in FIGS. 1 and 5, in a plane perpendicular to the longitudinal axis 101, a projection of the auxiliary handle 52 on the plane surrounds and is formed with a downwardly open region A, where the projection of the main handle 112 on the plane is located in the region A.

The highest point of the housing 10 in the direction of the motor axis 102 is lower than the highest point of the auxiliary handle 52 in the direction of the motor axis 102, and the distance L1 between the highest point of the housing 10 and the highest point of the auxiliary handle 52 is further greater than or equal to 30 mm and less than or equal to 50 mm. Further, the projection of the housing 10 on the plane is located in the region A or on the lower side of the region A. In this way, the size of the hedge trimmer 100 is smaller and the height is lower, which can make the center of gravity (G) of the whole machine lower, and thereby the stability of user operation can be improved.

As shown in FIG. 1 and FIG. 4, the hedge trimmer 100 further includes a safety switch 55, the safety switch 55 is slidably connected to the housing 10, and the safety switch 55 has at least a locking position and an unlocking position when moving relative to the housing 10. When the safety switch 55 is in the locking position, the safety switch 55 can lock the trigger 53 in the initial position, avoiding misoperation of the trigger 53 caused by carelessness, and further avoiding the damage caused by the accidental start of the hedge trimmer 100; when the safety switch 55 is in the unlocking position, the rotation of the trigger 53 relative to the housing 10 is released, at which point the trigger 53 can move between the initial position and the trigger position relative to the housing 10. Specifically, the safety switch 55 is disposed on the connecting portion 113, and the safety switch 55 is located between the main handle 112 and the auxiliary handle 52.

The hedge trimmer 100 further includes a power source access interface 56. The power source access interface 56 is used for accessing a power source to supply electric power to the motor 51. The housing 10 is also formed with a hole 114 on the lower side of the holding portion 112a for part of a user's hand to pass through to hold the main handle 112, and the power source access interface 56 is disposed on the lower side of the hole 114.

The power source access interface 56 specifically includes an interface housing 561 and an electrode sheet 562. The interface housing 561 surrounds and is formed with an interface groove 561a, and the interface groove 561a has a notch 561c that is open to the outside of the housing 10. Further, the notch 561c open rearward. The electrode sheet 562 is disposed in the interface groove 561a, and the number of electrode sheets 562 is at least two.

The notch 561c has a height direction and height direction that are perpendicular to each other. In this embodiment, the height direction of the notch 561c is parallel to the direction of the motor axis 102, the width direction of the notch 561c is perpendicular to the width direction of the motor axis 102, and the width direction of the notch 561c is also perpendicular to the longitudinal axis 101. The size L2 of the notch 561c in the width direction is also larger than the size L3 of the notch 561c in the height direction. In this way, the notch 561c becomes a smaller flat groove along the direction of the motor axis 102, making the height of the hedge trimmer 100 in the upper and lower direction is lower, which helps to reduce the center of gravity (G) of the whole machine. The notch 561c opens rearward, so that not only the user can conveniently access the external power source, but also the power source accessed will not make the hedge trimmer 100 become unbalanced. Of course, it can be understood that in other embodiments, the width direction of the notch 561c may also not be perpendicular to the direction of the motor axis 102, the purpose of the present invention is that the hedge trimmer includes a power source access interface having a flat notch 561c, but as a preferred solution, in order to make the hedge trimmer 100 as small in size as possible in the direction of the motor axis 102, preferably the width direction of the notch 561c is perpendicular to the motor axis 102 and perpendicular to the longitudinal axis 101.

Specifically, the ratio of the size L3 of the notch 561c of the interface groove 561a in the direction of the motor axis 102 to the size L4 of the housing 10 in the direction of the motor axis 102 is greater than or equal to 1 : 4.5 and less than or equal to 1: 6, and the ratio of the size L3 of the notch 561c of the interface groove 561a in the direction of the motor axis 102 to the size L5 of the auxiliary handle 52 in the direction of the motor axis 102 is greater than or equal to 1: 6 and less than or equal to 1: 7.5. In this way, the size of the notch 561c of the interface groove 561a relative to the housing 10 in the direction of the motor axis 102 is reasonable, which is beneficial to the miniaturization of the hedge trimmer 100 and for further reducing the center of gravity (G) of the hedge trimmer 100. More specifically, in this embodiment, the blade assembly 20 has a distal end 201 facing away from the housing 10 and a proximal end 202 facing toward the housing 10 along the longitudinal axis 101, where the distal end 201 of the blade assembly 20, the center of gravity (G) of the hedge trimmer 100 and the main handle 112 are substantially disposed in a straight line, so that the center of gravity (G) of the hedge trimmer 100 is reasonably disposed along the axis direction of the motor shaft 511, thereby avoiding the overturning of the hedge trimmer 100 during operation and improving the stability of operation.

As shown in FIG. 5, the cross section of the notch 561c of the interface groove 561a in a plane perpendicular to direction of the longitudinal axis 101 is a rectangle, of course. The size of the rectangle in the direction of the motor axis 102 is smaller than the size of the rectangle in a direction perpendicular to the motor axis 102 and perpendicular to the longitudinal axis 101, that is, the size of the rectangle in the height direction is smaller than the size of the rectangle in the width direction.

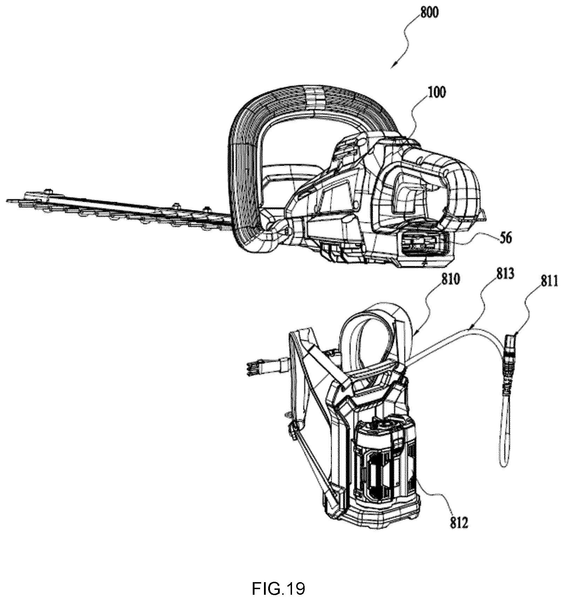

As shown in FIG. 19, a tool system 800 according to an embodiment includes the hedge trimmer 100 of FIG. 1 and a power source device 810 for supplying electric power to the hedge trimmer 100. The power source device 810 includes a power source output interface 811, a battery pack 812 and a power cord 813. The power source output interface 811 can be inserted into the interface groove 561a of the power source access interface 56, the battery pack 812 is used for storing electric energy, and the power cord 813 is electrically connected to the power source output interface 811 and the battery pack 812. The power source output interface 811 and the power source access interface 56 form a mechanical connection and an electrical connection, so that the electric energy stored in the battery pack 812 can be input into the hedge trimmer 100 to supply electric power to the motor 51.

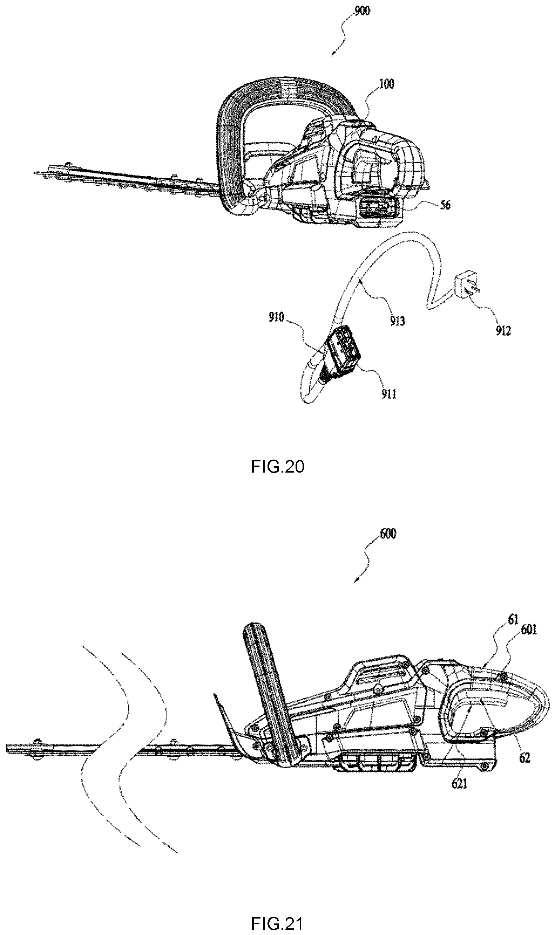

As shown in FIG. 20, a tool system 900 according to another embodiment includes the hedge trimmer 100 of FIG. 1 and a power source device 910 for supplying electric power to the hedge trimmer 100. The power source device 910 includes a power source output interface 911, a plug 912 and a power cord 913. The power source output interface 911 can be inserted into the interface groove 561a of the power source access interface 56. The plug 912 is used for connecting a mains socket, and the power cord 913 is electrically connected to the power source output interface 911 and the plug 912. The power source output interface 911 and the power source access interface 56 form a mechanical connection and an electrical connection, so that the mains electricity can be input into the hedge trimmer 100 for supplying electric power to the motor 51.

In the interface groove 561a, the power source access interface 56 is further formed with a guide portion 561b. The guide portion 561b guides the external power source output interfaces 811 and 911 to be inserted into the interface groove 561a along a first direction 105, the first direction 105 is also perpendicular to the plane determined by the width direction and the height direction of the notch 561c, and the first direction 105 in which the power source output interfaces 811 and 911 are inserted into the interface groove 561a is also parallel to the longitudinal axis 101. In this embodiment, the guide portion 561b is the inner wall of the interface housing 561. In other embodiments, the first direction 105 in which the power source output interfaces 811 and 911 are inserted into the interface groove 561a may also intersect the longitudinal axis 101 obliquely.

As shown in FIG. 10 and FIG. 11, the housing 10 includes a main body portion 11, an upper cover 12 and a lower cover 13 which are detachable, where the main body portion 11 is formed with the above main handle 112 for the user to hold, and the upper cover 12 and the lower cover 13 are connected to the main body portion 11 by screws separately. The hedge trimmer 100 further includes a circuit board 57 and a heat dissipation plate 58, the circuit board 57 is connected to the motor 51 to control the motor 51, and the heat dissipation plate 58 is used for dissipating heat from the circuit board 57. The main body portion 11 further includes a support portion 11a for supporting the circuit board 57 and the heat dissipation plate 58. The circuit board 57 and the heat dissipation plate 58 are assembled in a box 59, and the box 59 is placed on the upper side of the support portion 11a, so that the support portion 11a supports the circuit board 57.

The upper cover 12 is disposed on the upper side of the main body portion 11, the upper cover 12 and the main body portion 11 together surround and are formed with an upper chamber 121, and the motor 51, the circuit board 57 and the heat dissipation plate 58 are all received in the upper chamber 121. The lower cover 13 is disposed on the lower side of the main body portion 11, the lower cover 13 and the main body portion 11 together surround and are formed with a lower chamber 131, and the transmission device 30 is disposed in the lower chamber 131. In this way, when any one of the motor 51, the circuit board 57 and the heat dissipation plate 58 is damaged, the user merely needs to open the upper cover 12 to repair the parts in the upper chamber 121, thereby improving the convenience of maintenance. Similarly, when the transmission device 30 is damaged, the user merely needs to open the lower cover 13 to repair the parts in the lower chamber 131, thereby further improving the convenience of maintenance.

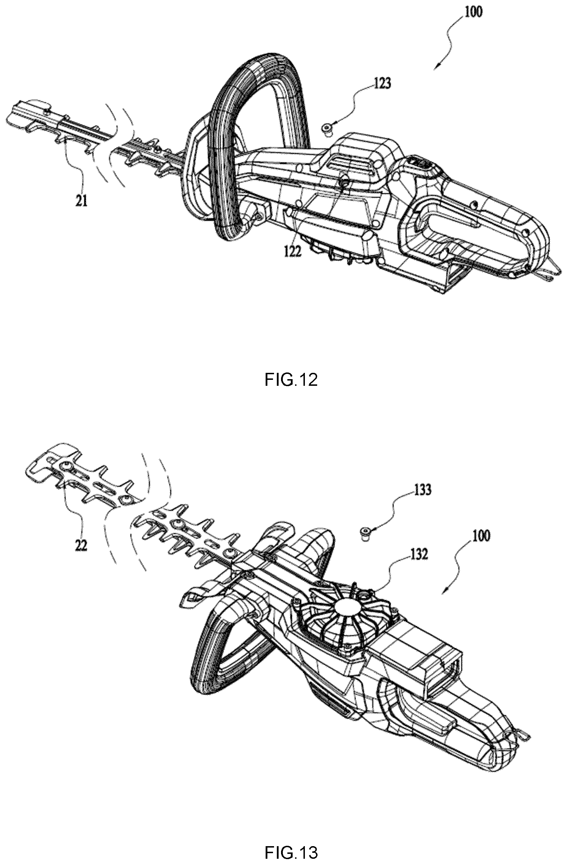

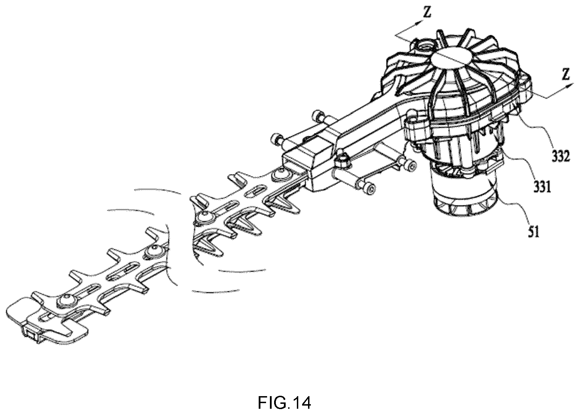

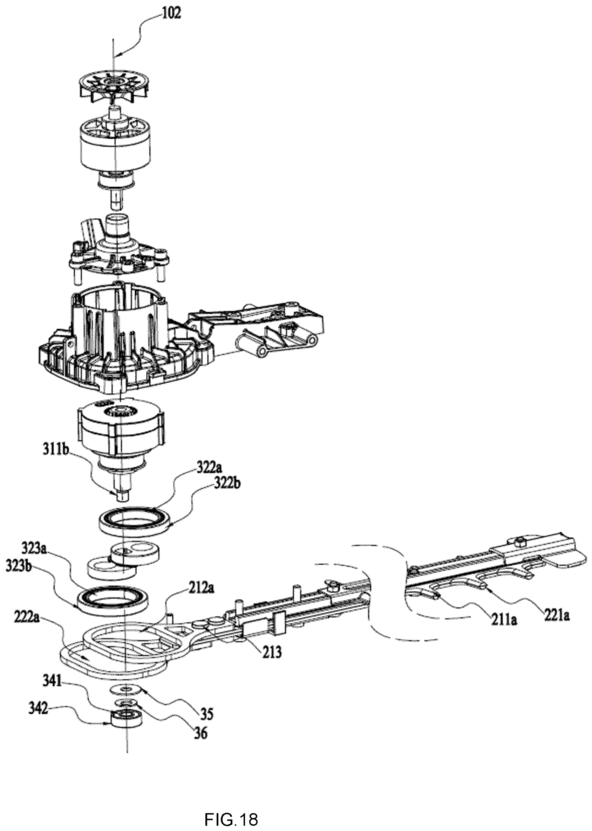

As shown in FIG. 10 to FIG. 18, the transmission device 30 includes a speed reduction assembly 31, an eccentric block assembly 32, and a device housing 33. The speed reduction assembly 31 is used for reducing the rotation speed for transmission from the motor 51 to the eccentric block assembly 32, the eccentric block assembly 32 is used for converting the rotation output by the speed reduction assembly 31 into a relative reciprocating motion between the first blade 21 and the second blade 22, and the device housing 33 is used for receiving at least part of the speed reduction assembly 31 and the eccentric block assembly 32.

Specifically, the device housing 33 includes a first chamber portion 331 surrounding and formed with a first chamber 331a. The motor 51 includes a stator bracket 512, the stator bracket 512 is used for supporting the motor 51, and the stator bracket 512 is further formed with a through hole 512a that allows the motor shaft 511 to pass through. The stator bracket 512 is connected to an end of the first chamber portion 331 of the device housing 33 facing toward the motor 51, so that a side of the first chamber 331a facing toward the motor 51 is partially covered. The device housing 33 further includes an extension portion 332 extending to the first chamber portion 331 in a direction facing away from the speed reduction assembly 31, the extension portion 332 and the lower cover 13 of the housing 10 together surround and are formed with a second chamber 332a, the second chamber 332a is in communication with the first chamber 331a, and the eccentric block assembly 32 is disposed in the second chamber 332a. When the user opens the lower cover 13, the second chamber 332a is open. At this time, the user can repair or replace the eccentric block assembly 32.

The housing 10 is also formed with a first oil injection port 122 and a second oil injection port 132 which are used for injecting grease. The first oil injection port 122 is in communication with the first chamber 331a, and the second oil injection port 132 is in communication with the second chamber 332a. Then, the user can inject grease from the upper and lower sides of the whole formed by the speed reduction assembly 31 and the eccentric block assembly 32, thereby improving the lubrication performance of the transmission device 30 and extending the service life of the hedge trimmer 100.

In the direction along the motor axis 102, the first oil injection port 122 and the second oil injection port 132 are respectively disposed on two sides of the device housing 33. Specifically, the first oil injection port 122 is disposed on the upper cover 12 of the housing 10, and the second oil injection port 132 is disposed on the lower cover 13 of the housing 10. Since the second chamber 332a is surrounded and formed by the extension portion 332 and the lower cover 13, the second oil injection port 132 penetrates the lower cover, that is, can be directly in communication with the second chamber 332a, so that the grease can be directly poured into the second chamber 332a through the second oil injection port 132, thereby lubricating the eccentric block assembly 32 located in the second chamber 332a. A certain distance still exists between the upper cover 12 and the first chamber 331a. Therefore, the hedge trimmer 100 further includes an oil injection pipe 512b, the oil injection pipe 512b is formed with an oil injection channel 512c, and the first oil injection port 122 is in communication with the first chamber 331a through the oil injection channel 512c, so that when the user injects grease into the first oil injection port 122, the grease will flow into the first chamber 331a through the oil injection channel 512c, thereby lubricating the speed reduction assembly 31 disposed in the first chamber 331a.

The oil injection pipe 512b is formed by the stator bracket 512 and is located on a side of the stator bracket 512 facing away from the speed reduction assembly 31, that is, the oil injection pipe 512b is located on the upper side of the stator bracket 512. The oil injection channel 512c penetrates the stator bracket 512 to be in communication with the first chamber 331a. Of course, it can be understood that in other embodiments, the oil injection pipe 512b may also be formed separately and then fixed to the stator bracket 512.

In order to avoid leakage of grease, the hedge trimmer 100 further includes a first seal member 123 and a second seal member 133, the first seal member 123 seals the first oil injection port 122, and the second seal member 133 seals the second oil injection port 132. Specifically, the first seal member 123 is a bolt detachably connected to the first oil injection port 122, and the second seal member 133 is also a bolt detachably connected to the second oil injection port 132.

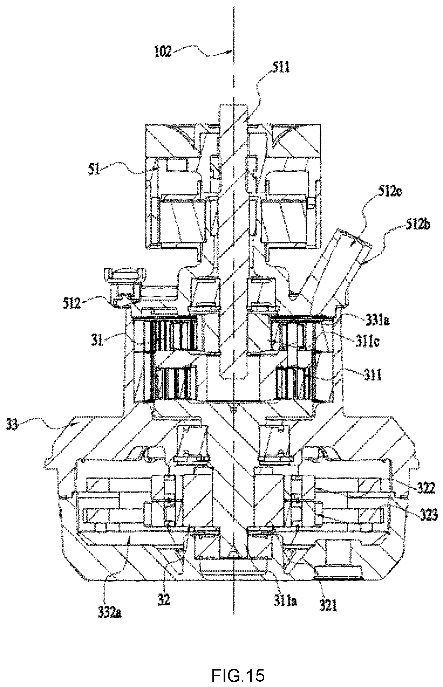

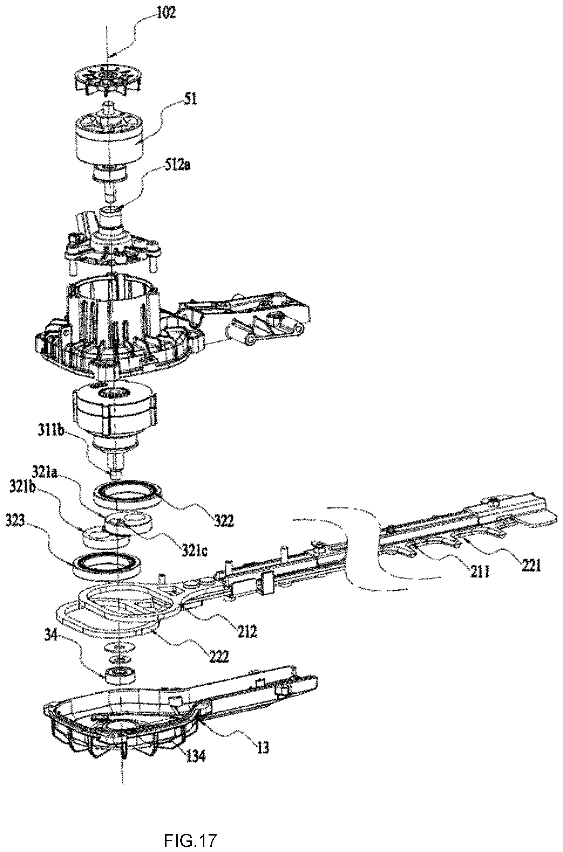

As shown in FIG. 15 and FIG. 17, the speed reduction assembly 31 includes a planetary gear train 311. In this embodiment, the speed reduction assembly 31 specifically includes a two-stage planetary gear train 311. The two-stage planetary gear train 311 includes a driving shaft 311a for outputting motion to the eccentric block assembly 32. The planetary gear train 311 further includes a first gear 311c for introducing motion output from the motor 51 into the transmission device 30.

The eccentric block assembly 32 includes an eccentric block 321, a first bearing 322, and a second bearing 323. The eccentric block 321 includes a first eccentric portion 321a and a second eccentric portion 321b which are sequentially disposed along the direction of the motor axis 102, and the eccentric block 321 includes an eccentric hole 321c passing through the first eccentric portion 321a and the second eccentric portion 321b in sequence along the direction of the motor axis 102. The driving shaft 311a passes through the eccentric hole 321c. The driving shaft 311a includes a passing portion 311b passing through the eccentric hole 321c. The driving shaft 311a forms a transmission cooperation with the eccentric block 321. The first bearing 322 is sleeved on the outer periphery of the first eccentric portion 321a, and the second bearing 323 is sleeved on the outer periphery of the second eccentric portion 321b. In order to cooperate with the eccentric block 321, the first blade 21 includes a first blade edge portion 211 and a first connecting portion 212, and the second blade 22 includes a second blade edge portion 221 and a second connecting portion 222. The first blade edge portion 211 is formed with a plurality of first blade edges 211a, the first connecting portion 212 connects the first blade edge portion 211 and the transmission device 30, the second blade edge portion 221 is formed with a plurality of second blade edges 221a, and the second connecting portion 222 connects the second blade edge portion 221 and the transmission device 30. The first bearing 322 includes a first inner ring 322a which is sleeved on the outer periphery of the first eccentric portion 321a and in contact with the first eccentric portion 321a, and further includes a first outer ring 322b which is in contact with the first connecting portion 212. The first connecting portion 212 is formed with a first oblong hole 212a, and the first bearing 322 is disposed in the first oblong hole 212a. The second bearing 323 includes a second inner ring 323a which is sleeved on the outer periphery of the second eccentric portion 321b and in contact with the second eccentric portion 321b, and further includes a second outer ring 323b which is in contact with the second connecting portion 222. The second connecting portion 222 is formed with a second oblong hole 222a, and the second bearing 323 is disposed in the second oblong hole 222a. In this way, when the driving shaft 311a drives the eccentric block 321 to rotate, the eccentric block 321 can drive the first blade 21 and the second blade 22 so that a relative reciprocating motion is generated. Since the first bearing 322 is provided between the first eccentric portion 321a and the first connecting portion 212, and the second bearing 323 is provided between the second eccentric portion 321b and the second connecting portion 222, the wear between the first blade 21 as well as the second blade 22 and the eccentric block 321 can be less or reduced, thus improving the service life of the hedge trimmer 100.

The hedge trimmer 100 further includes a third bearing 34 which is sleeved on the passing portion 311b of the driving shaft 311a. The third bearing 34 includes a third inner ring 341 and a third outer ring 342. The third inner ring 341 is in clearance fit with the passing portion 311b, and the third outer ring 342 is fixedly connected to the lower cover 13. Specifically, the lower cover 13 may be disassembled from the housing 10. The lower cover 13 closes the receiving cavity 111a on the lower side of the receiving cavity 111a, the lower cover 13 is also formed with a receiving groove 134, and the third bearing 34 is disposed in interference fit with the receiving groove 134. In this way, when the user disassembles the lower cover 13 from the housing 10, the third bearing 34 will be disassembled along with the lower cover 13. At this time, the eccentric block assembly 32 will be exposed, and the user can disassemble the eccentric block 321, the first bearing 322, and the second bearing 323, thereby improving the convenience of the user in disassembling the eccentric block 321.

A spacer 35 and an elastic piece 36 are further provided between the third bearing 34 and the eccentric block 321. The spacer 35 is disposed between the elastic piece 36 and the eccentric block 321, and the elastic piece 36 is disposed between the third bearing 34 and the spacer 35. During assembly, the elastic piece 36 may bias the third bearing 34 and the spacer 35, which can make the parts fit tightly.

For the blade assembly 20, the first connecting portion 212 and the first blade edge portion 211 may also be formed separately, and the second connecting portion 222 and the second blade edge portion 221 may also be formed separately. In this way, during manufacture, the first connecting portion 212 and the second connecting portion 222 may be made of a first material, the first blade edge portion 211 and the second blade edge portion 221 may be made of a second material, and the first material and the second material may be different. For example, the first material is harder than the second material, so that the service life of the blade assembly 20 can be improved. Further, in a direction parallel to the motor axis 102, the first connecting portion 212 is thicker than the first blade edge portion 211, and the second connecting portion 222 is thicker than the second blade edge portion 221, further improving the service life of the blade assembly 20. Specifically, the first connecting portion 212 and the first blade edge portion 211 are connected as a whole by using a first connecting member 213, and the second connecting portion 222 and the second blade edge portion 221 are connected as a whole by using a second connecting member 223. The first connecting member 213 and the second connecting member 223
may be rivets, so that the first connecting portion 212 and the first blade edge portion 211 are riveted, and the second connecting portion 222 and the second blade edge portion 221 are riveted.

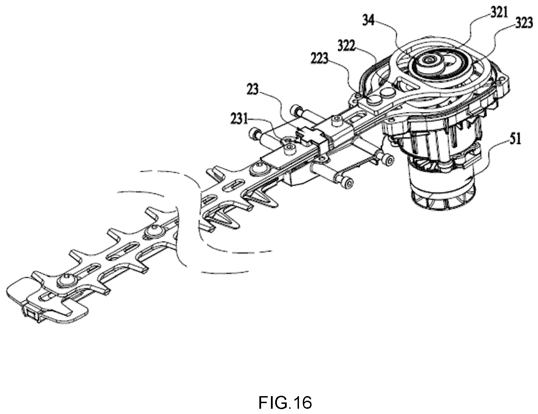

As shown in FIG. 16, the blade assembly 20 further includes a guide element 23, and the guide element 23 includes a collimation portion 231 for guiding the first blade 21 and the second blade 22 to move in the direction of the first straight line 103. The collimation portion 231 penetrates the hole formed in the first blade edge portion 211 and the second blade edge portion 221 in a direction parallel to the motor axis 102. The guide element 23 is also in contact with the blade assembly 20 and the housing 10 separately, so that the guide element 23 can also stop the leakage of grease from the housing 10. As shown in FIG. 21, the present invention further provides a hedge trimmer 600 according to a second embodiment. The parts of the hedge trimmer 100 provided in the first embodiment that are compatible with this embodiment can be applied to this embodiment. The difference between the hedge trimmer 600 in this embodiment and the hedge trimmer in the first embodiment is merely that the holding portion 61 of the hedge trimmer 600 in this embodiment extends along a first curve 601.

When the holding portion 61 extends in the direction of the first curve 601, similarly, the contact surface 621 and an outer surface of the holding portion 61 are butted into a whole with a substantially circular cross section which is in a normal plane in the direction of the first curve 601 when the trigger 62 is in the trigger position. The scope of the invention is limited by the appended claims.

### INDUSTRIAL APPLICABILITY

The present disclosure provides a hedge trimmer that can make the cutting ability of the hedge trimmer higher.

## Claims

1. A hedge trimmer (100), comprising:
a blade assembly (20) comprising a first blade (21) and a second blade (22) that are capable of moving relatively;
a motor (51) comprising a motor shaft (511) capable of rotating about a motor axis (102);
a transmission device (30) configured to transmit motion between the motor (51) and the blade assembly (20); and
a housing (10) formed with a receiving cavity (111a) for receiving the motor (51) and the transmission device (30);
wherein the motor (51) drives the first blade (21) and the second blade (22) to move relatively;
wherein the transmission device (30) comprises:
a speed reduction assembly (31) comprising a first gear (311c) for introducing motion output from the motor (51) to the transmission device (30); and
an eccentric block assembly (32) comprising an eccentric block (321), wherein the eccentric block (321) comprises a first eccentric portion (321a) for cooperating with the first blade (21) and a second eccentric portion (321b) for cooperating with the second blade (22);
wherein the first blade (21) comprises:
a first blade edge portion (211) formed with a plurality of first blade edges (211a); and
a first connecting portion (212) connecting the first blade edge portion (211) and the transmission device (30);
wherein the second blade (22) comprises:
a second blade edge portion (221) formed with a plurality of second blade edges (221a); and
a second connecting portion (222) connecting the second blade edge portion (221) and the transmission device (30); **characterized in that**:
the eccentric block assembly (32) further comprises:
a first bearing (322) comprising a first inner ring (322a) which is in contact with the first eccentric portion (321a) and a first outer ring (322b) which is in contact with the first connecting portion (212);
a second bearing (323) comprising a second inner ring (323a) which is in contact with the second eccentric portion (321b) and a second outer ring (323b) which is in contact with the second connecting portion (222); and
the first connecting portion (212) is formed with a first oblong hole (212a), the first bearing (322) is disposed in the first oblong hole (212a), the second connecting portion (222) is formed with a second oblong hole (222a), and the second bearing (323) is disposed in the second oblong hole (222a).

2. The hedge trimmer (100) of claim 1, wherein the first eccentric portion (321a) and the second eccentric portion (321b) are sequentially disposed along a direction of the motor axis (102).

3. The hedge trimmer (100) of claim 2, wherein the eccentric block (321) is further formed with an eccentric hole (321c) that sequentially penetrates the first eccentric portion (321a) and the second eccentric portion (321b), and the transmission device (30) comprises a driving shaft (311a) passing through the eccentric hole (321c) .

4. The hedge trimmer (100) of claim 3, wherein the driving shaft (311a) comprises a passing portion (311b) that passes through the eccentric hole (321c) and is located on a side of the eccentric block (321) away from the motor (51), and the hedge trimmer (100) further comprises a third bearing (34) sleeved on the passing portion (311b).

5. The hedge trimmer (100) of claim 4, wherein the housing (10) further comprises a lower cover (13) that is detachable from the housing (10), and the lower cover (13) closes the receiving cavity (111a) on a lower side of the receiving cavity (111a), and the third bearing (34) comprises:
a third inner ring (341) that is in clearance fit with the passing portion (311b); and
a third outer ring (342) that is fixedly connected to the lower cover (13).

6. The hedge trimmer (100) of claim 5, wherein the lower cover (13) is formed with a receiving groove (134), and the third bearing (34) is disposed in interference fit with the receiving groove (134).

7. The hedge trimmer (100) of claim 2, further comprising:
a circuit board (57) for controlling the motor (51);
wherein the housing (10) comprises:
a main body portion (11) formed with a main handle (112) for a user to hold and a support portion (11a) for supporting the circuit board (57);
an upper cover (12) surrounding, with the support portion (11a), and formed with an upper chamber (121) for receiving the motor (51); and
a lower cover (13) surrounding, with the support portion (11a), and formed with a lower chamber (131) for receiving the transmission device (30);
wherein the circuit board (57) is disposed in the upper chamber (121).

8. The hedge trimmer (100) of claim 7, wherein the eccentric block (321) is further formed with an eccentric hole (321c) that sequentially penetrates the first eccentric portion (321a) and the second eccentric portion (321b); the transmission device (30) comprises a driving shaft (311a), and the driving shaft (311a) comprises a passing portion (311b) passing through the eccentric hole (321c); and
the hedge trimmer (100) further comprises:
a third bearing (34) comprising a third inner ring (341) that is in clearance fit with the passing portion (311b) and a third outer ring (342) that is in interference fit with the lower cover (13).

9. The hedge trimmer (100) of claim 8, wherein the first connecting portion (212) and the second connecting portion (222) are made of a first material, and the first blade edge portion (211) and the second blade edge portion (221) are made of a second material different from the first material.

10. The hedge trimmer (100) of claim 8, further comprising:
a spacer (35) disposed between the third bearing (34) and the eccentric block (321); and
an elastic piece (36) disposed between the third bearing (34) and the spacer (35).

11. The hedge trimmer (100) of claim 8, wherein the lower cover (13) is connected to the main body portion (11) by screws.

12. The hedge trimmer (100) of claim 2, wherein a thickness of the first connecting portion (212) in the direction of the motor axis (102) is greater than a thickness of the first blade edge portion (211) in the direction of the motor axis (102); and a thickness of the second connecting portion (222) in the direction of the motor axis (102) is greater than a thickness of the second blade edge portion (221) in the axis direction of the motor (51).

13. The hedge trimmer (100) of claim 2, wherein the first blade (21) further comprises:
a first connecting member (213) configured to fixedly connect the first connecting portion (212) and the first blade edge portion (211) as a whole; and
a second connecting member (223) configured to fixedly connect the second connecting portion (222) and the second blade edge portion (221) as a whole.

## Patentansprüche

1. Heckenschere (100), umfassend:
eine Klingenanordnung (20), die eine erste Klinge (21) und eine zweite Klinge (22) umfasst, die in der Lage sind, sich relativ zu bewegen;
einen Motor (51), der eine Motorwelle (511) umfasst, die sich um eine Motorachse (102) drehen kann;
eine Übertragungseinrichtung (30), die dafür ausgelegt ist, Bewegung zwischen dem Motor (51) und der Klingenanordnung (20) zu übertragen; und
ein Gehäuse (10), das mit einem Aufnahmehohlraum (111a) zum Aufnehmen des Motors (51) und der Übertragungseinrichtung (30) gebildet ist;
wobei der Motor (51) die erste Klinge (21) und die zweite Klinge (22) antreibt, sodass sie sich relativ zueinander bewegen;
wobei die Übertragungseinrichtung (30) umfasst:
ein Untersetzungsgetriebe (31), das ein erstes Zahnrad (311c) zum Einleiten der Bewegungsausgabe vom Motor (51) an die Übertragungseinrichtung (30); und
einen exzentrischen Montageblock (32), der einen exzentrischen Block (321) umfasst; wobei der exzentrische Block (321) einen ersten exzentrischen Abschnitt (321a) zur Kooperation mit der ersten Klinge (21) umfasst und einen zweiten exzentrischen Abschnitt (321b) zur Kooperation mit der zweiten Klinge (22) umfasst;
Wobei die erste Klinge (21) umfasst:
einen ersten Klingenkantenabschnitt (211), der mit einer Vielzahl von ersten Klingenkanten (211a) geformt ist; und
einen ersten Verbindungsabschnitt (212), der den ersten Klingenkantenabschnitt (211) und die Übertragungseinrichtung (30) verbindet;
wobei die zweite Klinge (22) umfasst:
einen zweiten Klingenkantenabschnitt (221), der mit einer Vielzahl von zweiten Klingenkanten (221a) gebildet ist;
und
einen zweiten Verbindungsabschnitt (222), der den zweiten Klingenkantenabschnitt (221) und die Übertragungseinrichtung (30) verbindet; **dadurch gekennzeichnet, dass**:
der exzentrische Montageblock (32) ferner umfasst:
ein erstes Lager (322), das einen ersten Innenring (322a) umfasst, der in Kontakt mit dem ersten exzentrischen Abschnitt (321a) ist, und einen ersten Außenring (322b), der in Kontakt mit dem ersten Verbindungsabschnitt (212) ist;
ein zweites Lager (323), das einen zweiten Innenring (323a) umfasst, der on Kontakt mit dem zweiten exzentrischen Abschnitt (321b) ist, und einen zweiten Außenring (323b) umfasst, der in Kontakt mit dem zweiten Verbindungsabschnitt (222) ist; und
der erste Verbindungsabschnitt (212) ist mit einem ersten Langloch (212a) ausgebildet, das erste Lager (322) is im ersten Langloch (212a) angeordnet, der zweite Verbindungsabschnitt (222) ist mit einem zweiten Langloch (222a) gebildet, und das zweite Lager (323) ist im zweiten Langloch (222a) angeordnet.

2. Heckenschere (100) nach Anspruch 1, wobei der erste exzentrische Abschnitt (321a) und der zweite exzentrische Abschnitt (321b) sequentiell entlang einer Richtung der Motorachse (102) angeordnet sind.

3. Heckenschere (100) nach Anspruch 2, wobei der exzentrische Block (321) ferner mit einem exzentrischen Loch (321c) gebildet ist, das sequentiell den ersten exzentrischen Abschnitt (321a) den zweiten exzentrischen Abschnitt (321b) durchdringt, und die Übertragungseinrichtung (30) umfasst eine Antriebswelle (311a), die durch das exzentrische Loch (321c) verläuft.

4. Heckenschere (100) nach Anspruch 3, wobei die Antriebswelle (311a) eine Durchlaufstrecke (311b) umfasst, die durch das exzentrische Loch (321c) und sich auf einer Seite des exzentrischen Blocks (321) weg vom Motor (51) befindet, und die Heckenschere (100) umfasst ferner ein drittes Lager (34), das sich mit Hülsen auf die Durchlaufstrecke (311b) befindet.

5. Heckenschere (100) nach Anspruch 4, wobei das Gehäuse (10) ferner eine untere Abdeckung (13) umfasst, die vom Gehäuse (10) lösbar ist, und die untere Abdeckung (13) schließt den Aufnahmehohlraum (111a) auf einer unteren Seite des Aufnahmehohlraums (111a), und das dritte Lager (34) umfasst:
einen dritten Innenring (341), der in Spielpassung mit der Durchlaufstrecke (311b) ist; und
einen dritten Außenring (342), der fest mit der unteren Abdeckung (13) verbunden ist.

6. Heckenschere (100) nach Anspruch 5, wobei die untere Abdeckung (13) mit einer Aufnahmenut (134) gebildet ist, und das dritte Lager (34) ist in Presspassung mit der Aufnahmenut (134).

7. Heckenschere (100) nach Anspruch 2, ferner umfassend:
eine Platine(57) zum Steuern des Motors (51);
wobei das Gehäuse (10) umfasst:
einen Hauptkörperteil (11) mit einem Hauptgriff (112) für einen Benutzer zum Halten und einen Stützabschnitt (11a) zum Stützen der Platine (57);
eine umgebende obere Abdeckung (12), mit dem Stützabschnitt (11a), und mit einer oberen Kammer (121) zum Aufnehmen des Motors (51) ausgebildet; und
eine umgebende untere Abdeckung (13), mit dem Stützabschnitt (11a), und mit einer unteren Kammer (131) zum Aufnehmen der Übertragungseinrichtung (30) ausgebildet;
wobei die Platine (57) in der oberen Kammer (121) angeordnet ist.

8. Heckenschere (100) nach Anspruch 7, wobei der exzentrische Block (321) ferner mit einem exzentrischen Loch (321c) gebildet ist, das sequentiell den ersten exzentrischen Abschnitt (321a) und den zweiten exzentrischen Abschnitt (321b) durchdringt; die Übertragungseinrichtung (30) umfasst eine Antriebswelle (311a),und die Antriebswelle (311a) umfasst eine Durchlaufstrecke (311b), die durch das exzentrische Loch (321c) verläuft; und
die Heckenschere (100) umfasst ferner:
ein drittes Lager (34), das einen dritten Innenring (341) umfasst, der in Spielpassung mit der Durchlaufstrecke (311b) ist, und einen dritten Außenring (342), der in Presspassung mit der unteren Abdeckung (13) ist.

9. Heckenschere (100) nach Anspruch 8, wobei der erste Verbindungsabschnitt (212) und der zweite Verbindungsabschnitt (222) aus einem ersten Material hergestellt sind, und der erste Klingenkantenabschnitt (211) und der zweite Klingenkantenabschnitt (221) sind aus einem zweiten Material hergestellt, das sich vom ersten Material unterscheidet.

10. Heckenschere (100) nach Anspruch 8, ferner umfassend:
einen Abstandshalter (35), der zwischen dem dritten Lager (34) und dem exzentrischen Block (321) angeordnet ist; und
ein elastisches Stück (36), das zwischen dem dritten Lager (34) und dem Abstandshalter (35) angeordnet ist.

11. Heckenschere (100) nach Anspruch 8, wobei die untere Abdeckung (13) mit dem Hauptkörperteil (11) durch Schrauben verbunden ist.

12. Heckenschere (100) nach Anspruch 2, wobei eine Dicke des ersten Verbindungsabschnitts (212) in Richtung der Motorachse (102) größer als eine Dicke des ersten Klingenkantenabschnitts (211) in Richtung der Motorachse (102) ist; und eine Dicke des zweiten Verbindungsabschnitts (222) in Richtung der Motorachse (102) ist größer als eine Dicke des zweiten Klingenkantenabschnitts (221) in der Achsenrichtung des Motors (51).

13. Heckenschere (100) nach Anspruch 2, wobei die erste Klinge (21) ferner umfasst:
ein erstes Verbindungselement (213), das dafür ausgelegt ist, den ersten Verbindungsabschnitt (212) fest mit dem ersten Klingenkantenabschnitt (211) als Ganzes zu verbinden; und
ein zweites Verbindungselement (223), das dafür ausgelegt ist, den zweiten Verbindungsabschnitt (222) fest mit dem zweiten Klingenkantenabschnitt (221) als Ganzes zu verbinden.

## Revendications

1. Taille-haie (100) comprenant :
un ensemble de lame (20) comprenant une première lame (21) et une seconde lame (22) qui sont capables de se déplacer de manière relative entre elles,
un moteur (51) comprenant un arbre de moteur (511) capable de tourner sur un axe de moteur (102) ;
un dispositif de transmission (30) configuré pour transmettre un mouvement entre le moteur (51) et l'ensemble de lame (20) ; et
un logement (10) formé avec une cavité de réception (111a) pour recevoir le moteur (51) et le dispositif de transmission (30) ;
dans lequel le moteur (51) entraîne la première lame (21) et la seconde lame (22) à déplacer de manière relative entre elles ;
dans lequel le dispositif de transmission (30) comprend :
un ensemble de réduction de vitesse (31) comprenant un premier engrenage (311c) pour introduire une sortie de mouvement du moteur (51) vers le dispositif de transmission (30) ; et
un ensemble de bloc excentrique (32) comprenant un bloc excentrique (321), dans lequel le bloc excentrique (321) comprend une première partie excentrique (321a) pour coopérer avec la première lame (21) et une seconde partie excentrique (321b) pour coopérer avec la seconde lame (22) ;
dans lequel la première lame (21) comprend :
une partie d'arêtes de première lame (211) formée avec une pluralité d'arêtes de première lame (221a) ; et
une première partie de connexion (212) connectant la partie d'arêtes de première lame (211) et le dispositif de transmission (30) ;
dans lequel la seconde lame (22) comprend :
une partie d'arêtes de seconde lame (221) formée avec une pluralité d'arêtes de seconde lame (221a) ;
et
une seconde partie de connexion (222) connectant la partie d'arêtes de seconde lame (221) et le dispositif de transmission (30) ; **caractérisé en ce que**
l'ensemble de bloc excentrique (32) comprend en outre :
un premier palier (322) comprenant une première bague intérieure (322a) qui est en contact avec la première partie excentrique (321a) et une première bague extérieure (322b) qui est en contact avec la première partie de connexion (212) ;
un second palier (323) comprenant une seconde bague extérieure (323a) qui est en contact avec la seconde partie excentrique (321b) et une seconde bague extérieure (323b) qui est en contact avec la seconde partie de connexion (222) ; et
la première partie de connexion (212) est formée avec un premier trou oblong (212a), le premier palier (322) est disposé dans le premier trou oblong (212a), la seconde partie de connexion (222) est formée avec un second trou oblong (222a) et le second palier (323) est disposé dans le second trou oblong (222a).

2. Taille-haie (100) selon la revendication 1, dans lequel la première partie excentrique (321a) et la seconde partie excentrique (321b) sont disposées de manière séquentielle le long d'une direction de l'axe du moteur (102).

3. Taille-haie (100) selon la revendication 2, dans lequel le bloc excentrique (321) est en outre formé avec un trou excentrique (321c) qui pénètre de manière séquentielle la première partie excentrique (321a) et la seconde partie excentrique (321b), et le dispositif de transmission (30) comprend un arbre d'entraînement (311a) passant à travers le trou excentrique (321c).

4. Taille-haie (100) selon la revendication 3, dans lequel l'arbre d'entraînement (311a) comprend une partie de passage (311b) qui passe à travers le trou excentrique (321c) et est située sur un côté du bloc excentrique (321) à distance du moteur (51), et le taille-haie (100) comprend en outre un troisième palier (34) manchonné sur la partie de passage (311b).

5. Taille-haie (100) selon la revendication 4, dans lequel le logement (10) comprend en outre un capot inférieur (13) qui est séparable du logement (10), et le capot inférieur (13) ferme la partie de réception (111a) sur un côté inférieur de la cavité de réception (111a), et le troisième palier (34) comprend :
une troisième bague intérieure (341) qui est en insertion à dégagement avec la partie de passage (311b) ; et
une troisième bague extérieure (342) qui est reliée fixement au capot inférieur (13).

6. Taille-haie (100) selon la revendication 5, dans lequel le capot inférieur (13) est formé d'une rainure de réception (134), et le troisième palier (34) est disposé en insertion par interférence avec la rainure de réception (134).

7. Taille-haie (100) selon la revendication 2, comprenant en outre :
une carte de circuit (57) pour commander le moteur (51) ;
dans lequel le logement (10) comprend :
une partie de corps principale (11) formée avec une poignée (112) destinée à être tenue par utilisateur et une partie de support (11a) pour supporter la carte de circuit (57) ;
un capot supérieur (12) formant enceinte, avec la partie de support (11a), et formé avec une chambre supérieure (121) pour recevoir le moteur (51) ; et
un capot inférieur (13) formant enceinte, avec la partie de support (11a), et formé avec une chambre inférieure (131) pour recevoir le dispositif de transmission (30) ;
dans lequel la carte de circuit (57) est disposée dans la chambre principale (121).

8. Taille-haie (100) selon la revendication 7, dans lequel le bloc excentrique (321) est en outre formé avec un trou excentrique (321c) qui pénètre de manière séquentielle la première partie excentrique (321a) et la seconde partie excentrique (321b) ; le dispositif de transmission (30) comprend un arbre d'entraînement (311a), et l'arbre d'entraînement (311a) comprend une partie de passage (311b) passant à travers le trou excentrique (321c) ; et
le taille-haie (100) comprend en outre :
un troisième palier (34) comprenant une troisième bague intérieure (341) qui est en insertion par dégagement avec la partie de passage (311b) et une troisième bague extérieure (342) qui est en insertion par interférence avec le capot inférieur (13).

9. Taille-haie (100) selon la revendication 8, dans lequel la première partie de connexion (212) et la seconde partie de connexion (222) sont faites d'un premier matériau, et la partie d'arêtes de première lame (211) et la partie d'arêtes de seconde lame (221) sont faites d'un second matériau différent du premier matériau.

10. Taille-haie (100) selon la revendication 8, comprenant en outre :
un écarteur (35) disposé entre le troisième palier (34) et le bloc excentrique (321) ; et
une pièce élastique (36) disposée entre le troisième palier (34) et l'écarteur (35).

11. Taille-haie (100) selon la revendication 8, dans lequel le capot inférieur (13) est connecté à la partie de corps principale (11) par des vis.

12. Taille-haie (100) selon la revendication 2, dans lequel une épaisseur de la première partie de connexion (212) dans la direction de l'axe du moteur (102) est plus grande qu'une épaisseur de la partie d'arêtes de première lame (211) dans la direction de l'axe du moteur (102) ; et une épaisseur de la seconde partie de connexion (222) dans la direction de l'axe du moteur (102) est plus grande qu'une épaisseur de la seconde partie de connexion (221) dans la direction d'axe du moteur (51).

13. Taille-haie (100) selon la revendication 2, dans lequel la première lame (21) comprend en outre :
un premier membre de connexion (213) configuré pour connecter fixement la première partie de connexion (212) et la partie d'arêtes de première lame (211) en un tout ; et
un second membre de connexion (223) configuré pour connecter fixement la seconde partie de connexion (222) et la partie d'arêtes de seconde lame (221) en un tout.
